# EUROPEAN PATENT APPLICATION

(11) **EP 2 840 456 A2**
(43) Date of publication of application: **25.02.2015**
(21) Application number: 14180900.4
(22) Date of filing: 13.08.2014
(51) Int. Cl.: G05B 23/02

(54) **Operation history display apparatus and computer-readable storage medium**

(30) Priority: 22.08.2013 JP 2013172112
(71) Applicant: Yokogawa Electric Corporation, Tokyo 180-8750 (JP)
(72) Inventor: Tokuoka, Moe, Tokyo, 180-8750 (JP); Furihata, Ryouhei, Tokyo, 180-8750 (JP); Uomori, Yoshio, Tokyo, 180-8750 (JP)
(74) Representative: Henkel, Breuer & Partner

(57) **Abstract**

An operation history apparatus includes an operation history data storage configured to store an operation history data, an operation receiving module configured to receive an operation from a user, and a history tabulation module configured to perform tabulation on the operation history data using as tabulation item, display a graph representing a result of the tabulation, and display, when receiving a designation of a value representing part of the graph via the operation receiving module, operation history data corresponding to the value representing part in a list form.

## Description

### BACKGROUND

### TECHNICAL FIELD

The present invention relates to an operation history display apparatus for displaying an operation history. More particularly, the present invention relates to an operation history display apparatus that enhances the utility value of an operation history list of operations performed by a field device management apparatus, and to a computer program that causes a computer to function as such an operation history display apparatus.

### RELATED ART

In an industrial plant, measuring instruments, bulbs, actuator devices, and so on, which are generically referred to as field devices, operate under the control of a control monitoring system. The control monitoring system and each field device are connected to each other by a fieldbus according to standards such as Foundation Fieldbus, and Highway Addressable Remote Transducer (HART (registered trademarks)), and perform communication with each other via the fieldbus. Thus, various process control-operations are implemented. In recent years, wireless communication therebetween has been generalized.

A maintenance operation is performed on a field device according to a maintenance plan of a plant, periodically, or irregularly, or when abnormality occurs, or when adding a device to the field device. Non-patent Document 1 describes a field device management tool "FieldMate (registered trademark)" used for the maintenance of field devices, and so on.

This field device management tool is an application program that is installed on a notebook personal computer, a tablet personal computer, or the like, which can be connected to a fieldbus, and that enables the setting and the adjustment of various parameters of a field device and the management of the maintenance of the field device. The computer functions as a field device management apparatus by running this application program. The field device management apparatus uses tools, such as device type manager works (DTM Works), prepared corresponding to the field devices, respectively, and performs the management of each field device.

### [Prior Art Document]

### [Patent Document]

[Patent Document 1] JP-A-2010-61352

### [Non-patent Document]

[Non-patent Document 1] Isao Hirooka and three others, "FieldMate Field Device Management Tool for the New Era", Yokogawa Technical Report, Yokogawa Electric Corporation, May 20, 2007, Vol. 51 No. 2 (2007), pp. 45-48.

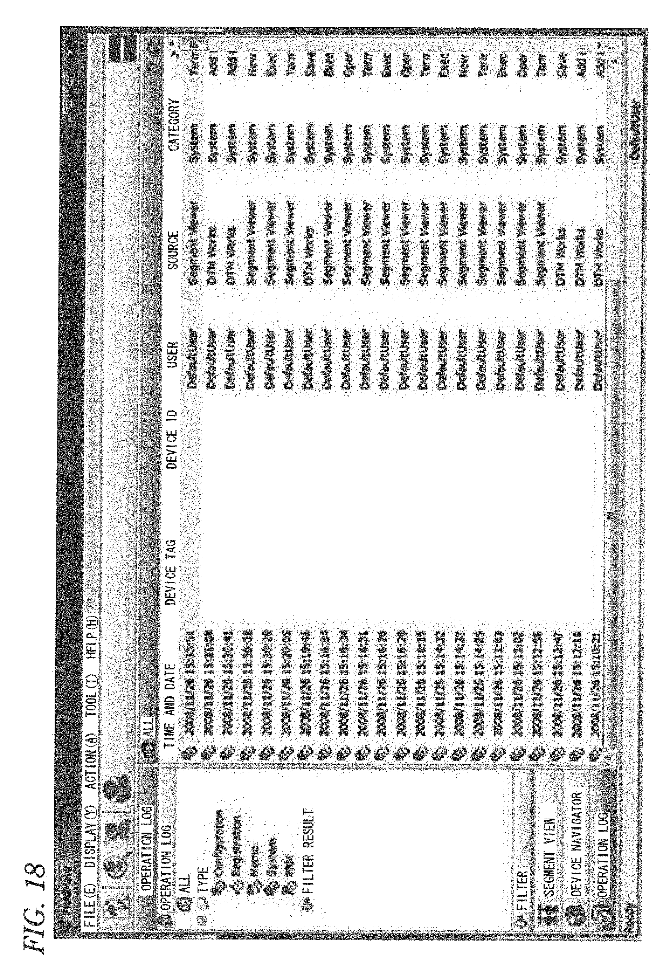

Various operations, such as parameter setting for the field device, registration of the field device, and each user's log-in and log-out, are performed in the field device management apparatus. Heretofore, such operations have been recorded as an operation history that can be viewed in a list form as illustrated in FIG. 18. An operation history list records time and date on which each operation is performed, a user who performs each operation, a target to which each operation is performed, each operation content and so on. Therefore, the operation history list is available for grasping the tendency of operations in the plant or extracting problematic points.

However, generally, the number of operation histories is huge. It is frequent that the operation history list covers thousands of pages in terms of the screen display illustrated in FIG. 18. Thus, it is difficult to grasp the tendency of operations performed on each field device or the tendency of operations performed by each user and extract problematic points, by simply referring to the operation history list. Further, if a user refers to information concerning a specific operation or the like, the user should find target information from a huge amount of operation history lists. Thus, the usability of the operation history list is not sufficiently good.

### SUMMARY

Exemplary embodiments of the invention provide an operation history display apparatus and a computer program which can enhance the utility value of the operation history list.

An operation history apparatus according to an exemplary embodiment, comprises:
an operation history data storage configured to store an operation history data;
an operation receiving module configured to receive an operation from a user; and
a history tabulation module configured to perform tabulation on the operation history data using a tabulation item, display a graph representing a result of the tabulation, and display, when receiving a designation of a value representing part of the graph via the operation receiving module, operation history data corresponding to the value representing part in a list form.

In the operation history display apparatus, the operation history data may include information concerning a user, device information, and an operation content, and, the history tabulation module may be configured to perform the tabulation, using each of the user, the device information, and the operation content as the tabulation item.

In the operation history display apparatus, the graph may include a legend describing a value displaying part, and when the history tabulation module receives a designation of one of items of the legend via the operation receiving module, the history tabulation module may perform narrowing-down using the item of the legend according to the designation and displays a graph.

In the operation history display apparatus, the history tabulation module may be configured to select a bar graph which includes a unit-of-display label representing a unit-of-display corresponding to a time-period, as the graph, and when the history tabulation module receives a designation of a part of the unit-of-display label via the operation receiving module, the history tabulation module may perform narrowing-down according to a time-period indicated by the part of the unit-of-display label according to the designation, and displays the graph.

The history tabulation module may be configured to display, as the bar graph, a stacked bar graph representing a breakdown of the tabulation item.

A computer-readable storage medium according to an exemplary embodiment may store a program for causing a computer to function as the operation history display apparatus.

According to the exemplary embodiments of the invention, it is possible to enhance the utility value of the operation

### BRIEF DESCRIPTION OF THE DRAWINGS

FIG. 1 is a block diagram illustrating the configuration of a field device management apparatus according to an embodiment.
FIG. 2 is a diagram illustrating an example of operation history data recorded in a history data storage.
FIGS. 3A to 3C are diagrams for explaining an outline of a history display in the field device management apparatus.
FIG. 4 is a diagram for explaining a change of a unit of display.
FIG. 5 is a diagram for explaining a change of the tabulation item.
FIG. 6 is a diagram for explaining a change of the tabulation item.
FIG. 7 is a diagram for explaining a list display of an operation history list.
FIG. 8 is a diagram for explaining a change of a tabulation item.
FIG. 9 is a diagram for explaining a change of a tabulation item.
FIG. 10 is a diagram for explaining a circle graph display.
FIG. 11 is a flowchart illustrating a fundamental drawing process of drawing a history display screen-image.
FIG. 12 is a flowchart illustrating a processing in the case of receiving an instruction to set the "time-period".
FIG. 13 is a flowchart illustrating a processing in the case of receiving an instruction to set the "unit of display".
FIG. 14 is a flowchart illustrating a processing in the case of receiving an instruction to designate the "unit-of-display label".
FIG. 15 is a flowchart illustrating a processing in the case of receiving a designation of the "tabulation items".
FIG. 16 is a flowchart illustrating a processing in the case of receiving a designation of the "legends".
FIG. 17 is a flowchart illustrating a processing in the case of receiving a designation of a graph part.
FIG. 18 is a diagram illustrating a related-art operation history list display screen-image.

### DETAILED DESCRIPTION

An embodiment of the invention is described hereinafter with reference to the accompanying-drawings. This embodiment describes a case where an operation history display apparatus according to the invention is applied to a field device management apparatus. Incidentally, the operation history display apparatus according to the invention is not limited to a field device management apparatus. The invention can be applied to various apparatuses that manage a user's operation history.

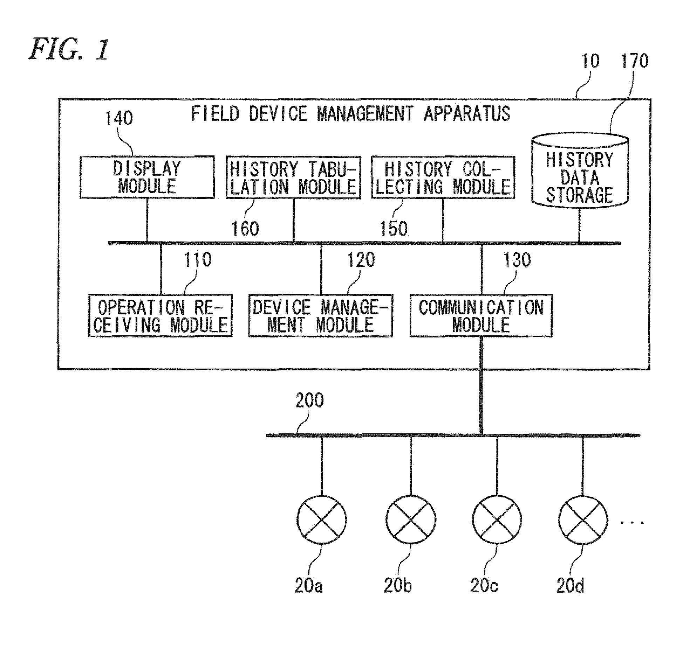

FIG. 1 is a block diagram illustrating the configuration of a field device management apparatus 10 according to this embodiment. The field device management apparatus 10 can be embodied by installing a field device management tool in a general-purpose computer such as a notebook personal computer and a tablet personal computer. Further, it is assumed that an associated tool such as a DTM is installed in the computer.

As illustrated in FIG. 1, the field device management apparatus 10 includes an operation receiving module 110, a device management module 120, a communication module 130, a display module 140, a history collecting module 150, a history tabulation module 160, and a history data storage 170. The field device management apparatus 10 manages plural types of plural field devices 20a, 20b, 20c, 20d ... connected to one another via a field bus 200. The connection configuration of the field bus 200 may be either a wireless connection configuration or a wired connection configuration.

The operation receiving module 110 is a function block that receives an operation performed by a user. The operation performed by a user can be received by various devices, such as a keyboard, a mouse, and a touch panel, included in the field device management apparatus 10. Especially, the field device management apparatus 10 according to this embodiment can easily be operated by simply designating a region on a screen image. Therefore, the field device management apparatus 10 is suitable for input using a touch panel, which is widely employed in plants or the like.

The device management module 120 is an essential function block serving as a field device management tool. The device management module 120 performs, based on a user's operation, the setting and the adjustment of various parameters of the field device 20 and the management of the maintenance of the field device 20. In addition, as accompanying-functions, the device management module 120 performs the management of users who perform operations using the field device management apparatus 10 and performs the control of the associated tools.

The communication module 130 is a function block that performs communication with the field device 20 according to a protocol used on the field bus 200. Incidentally, a control monitoring system (not shown), such as a decentralized control system (DCS), is connected to the field bus 200. The communication module 130 can communicate with the control monitoring system.

The display module 140 is a function block that causes a display device incorporated in the field device management apparatus 10 or an externally-connected display device to display various information, such as a menu, field device information, and an operation history.

The history collecting module 150 is a function block that collects information concerning operations that the operation receiving module 110 of the field device management apparatus 10 has received from users and records the collected information in the history data storage 170 as operation history data.

The history tabulation module 160 summarizes the operation history data recorded in the history data storage 170, based on a user's operation, and displays a result of summarizing, via the display module 140. The result of summarizing can be displayed in a graph form or in a list form. Further, the narrowing-down of the operation history data can be conducted by performing a simple operation on a graph.

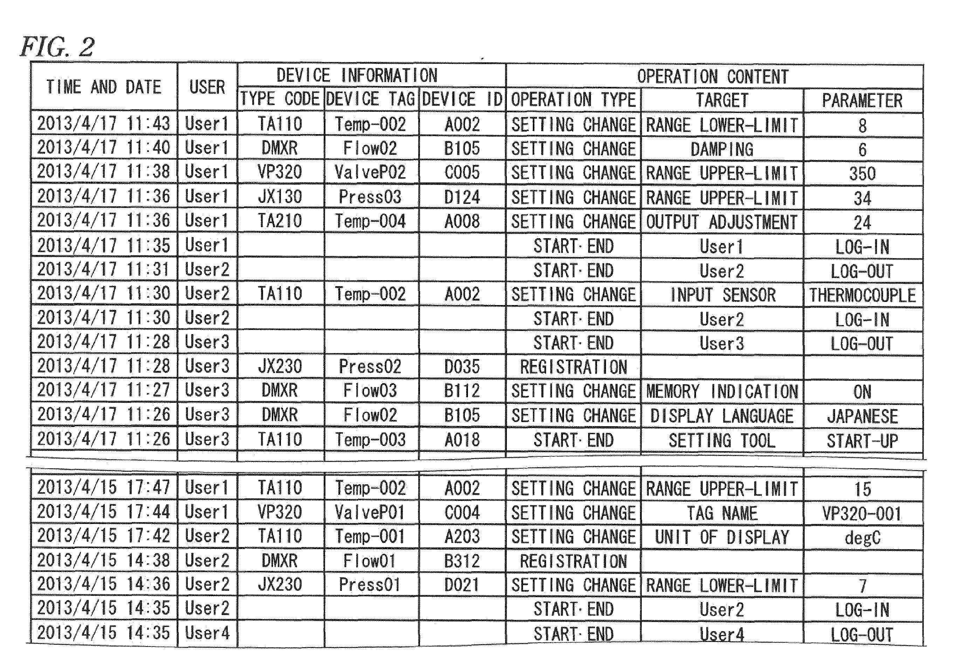

FIG. 2 is a diagram illustrating an example of operation history data recorded in the history data storage 170. According to this embodiment, the operation history data includes "time and date", "user", "device information", and "operation content". The operation history data is configured to have the same data structure as conventional one. Consequently, operation history data collected in the past can be used by the field device management apparatus 10 according to this embodiment. However, FIG. 2 illustrates just an example. The operation history data can be configured to have an optional data structure.

The "time and date" indicates time and data on which an operation is performed. The "user" is information identifying a user who performed an operation. A user who performed an operation can be identified by causing the user to log-in to the field device management apparatus 10. The "user" may include information such as "his/her department".

The "device information" is information concerning the field device 20 to be operated, and has a hierarchical structure configured by "Type Code", "Device Tag", and "Device Identification (ID)". The "Type Code" is information representing the type of a field device. A temperature transmitter, a flowmeter, a valve positioner, and a pressure transmitter can be cited as examples of the type of a field device. A symbol representing each type of a field device is recorded. The "device tag" is additional information set corresponding to each field device in a plant. The "Device ID" is information for identifying each field device. If a plant is configured such that each field device can be identified with the "Device Tag", the "Device ID" may be omitted. Further, "Device Information" may include information such as "Installation Location".

The "operation content" is information that designates an operation performed by a user, and has a hierarchical structure configured by "Operation Type", "Target", and "Parameter". As the "Operation Type", information representing one of the following types of an operation is recorded in response to a user's operation, that is, "Setting Change" representing operations of setting, adjusting parameters, or the like, "Start/End" representing operations of logging-in to and logging-out from the field device management apparatus 10, starting and ending the associated tools, or the like, and "Registration" representing operations of registering the field device 20 to the field bus 200 and so on. Apparently, another type may be recorded in response to a user's operation.

The "target" is information identifying a parameter to be set if the "operation type" is the "setting change". If the "operation type" is the "start/end", the "target" is information representing information that identifies a user who logs in or out, or an associated tool to be a target. If the "operation type" is the "registratian", the columns corresponding to the "Device Information" are blank.

In the example illustrated in FIG. 2, "Range Lower-Limit", "Output Adjustment", "Display Unit", and the like are recorded as the information identifying a parameter. Further, "User 1", "User 2", and so on are recorded as information identifying a user who logged in or logged out. Moreover, "setting tool" or the like is recorded as information identifying an associated tool.

The "parameter" is information represents a parameter value to be set if the "Operation Type" is "setting change", If the "Operation Type" is "start/end", the "Parameter" is information identifying logging-in to and logging-out or starting and ending an associated tool to be operated. If the "Operation Type" is "Registration", the columns "Target" and "Parameter" are blank.

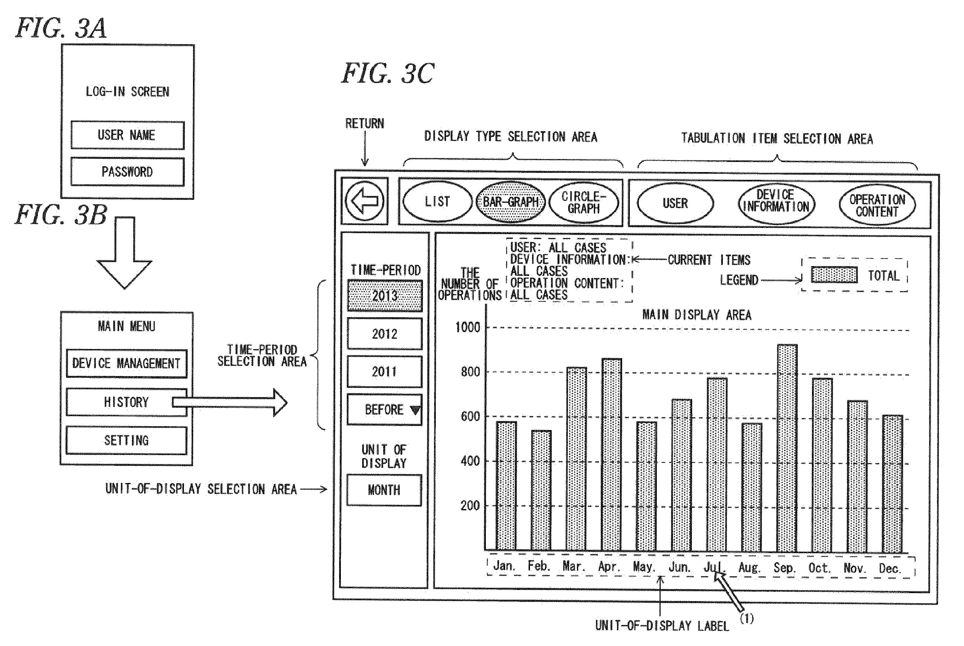

Next, the outline of the history display in the field device management apparatus 10 of the above configuration is described with reference to FIGS. 3A to 3C. As an example is illustrated in FIG. 3A and FIG. 3B, when a user name and a password are input from a "log-in" screen, user authentication is performed by the device management module 120. Then, a main menu is displayed after the authentication. In the main menu, a "history" button for performing the operation history display is displayed, in addition to a "device management" button for performing field device management that is an essential function, and a "setting" button for performing various setting. Hereinafter, the case of selecting the "history" button is described.

When the "history" button is selected, a history display screen-image, whose example is illustrated in FIG. 3C, is displayed. In the example illustrated in FIG. 3C, the history display screen-image is configured to include a main display area, a time-period selection area, a unit-of-display selection area, a "return" button, a display type selection area, and a tabulation item selection area.

The main display area is an area in which a graph or an operation history list based on the operation history data is displayed. Which of the graph and the operation history list is displayed can be designated in the display type selection area. In the example illustrated in FIG. 3C, a "list" button, a "bar graph" button, and a "circle graph" button are provided in the display type selection area. Thus, the bar graph (particularly, a stacked bar graph) and the circle graph can be selected as a graph.

In the case of selecting the bar graph, in addition to the graph, "current items", "legends", and a "unit-of-display label" representing the unit of display for displaying the time-period are displayed. Incidentally, the "current items" that represents tabulation items serving as tabulation targets, and the "legends" can also be displayed using circle graphs. The "current items" can also be displayed using an operation history list.

The tabulation item selection area is an area for selecting an item on which tabulation is performed. In the example illustrated in FIG. 3C, this item is selected from the "user", the "device information", and the "operation content". For example, if the "user" is selected, graph-making is performed such that the number of operations corresponding to each user can be known. If the "device information" or the "operation content" is selected, the number of operations corresponding to each item, which corresponds to a stratum of the "device information" or the "operation content". If none of the "user", the "device information", and the "operation content" is selected, a total of the operations is tabulated. Which of the items is selected is indicated in the "current item".

The "current item" represents tabulation targets corresponding to each of the "user", the "device information", and the "operation content". Therefore, the item "user" represents all users or a specific user. For example, if "User: All Cases", this means that the operation histories corresponding to all users are tabulation targets. If "User: User 1", this means that the operation history corresponding to the user "User 1" are tabulation targets.

The "device information" has a hierarchical structure including a "type code", a "device tag" and a "device ID". Therefore, the item "device information" represents one of all type codes, a specific type code, a specific device tag and a specific device ID. The "operation content" has a hierarchical structure including the "operation type", the "target" and the "parameter". Therefore, the item "operation content" represents one of all operation types, a specific operation type, a specific target and a specific parameter.

For example, if "User: User 1", "Device Information: All Cases", and "Operation Content: Setting and Registration", this indicates that the "setting and registration" operations corresponding to the user "User 1" are tabulation targets. Further, if "User: User 1", "Device Information: Device ID D035", and "Operation Content: Setting and Registration", this indicates that the "setting and registration" operations on the device, whose device ID is "D035", corresponding to the user "User 1" are tabulation targets. That is, massive operation history data can be narrowed down by changing the current items.

The time-period selection area is an area in which the time-period of an operation history serving as the source of tabulation targets is selected. The selection of the time-period can be performed in units of year. One or more of years from the current year to an optional past year can be selected.

The unit-of-display selection area is an area in which the unit of display used in a period of time represented by the horizontal axis of the bar graph is selected. The unit of display is selected from a "month", a "day", an "hour", and so on. In the example illustrated in FIG. 3C, "2013" is selected as the period of time, and a "month" is selected as the unit of display. Thus, the number of operations tabulated in each month of 2013 is displayed by a bar graph. Therefore, the "unit-of-display label" shows Jan. to Dec.

An initial state of the history display screen-image can be set according to a user's instructions. For example, the history display screen-image can be put into a state in which the current year is selected in the time-period selection area, and in which the bar graph is selected in the display type selection area, and in which none is selected in the tabulation item selection area.

Next, an operation of the field device management apparatus 10 in the case of receiving an instruction from a user by the history display screen-image is described hereinafter, using a concrete example.

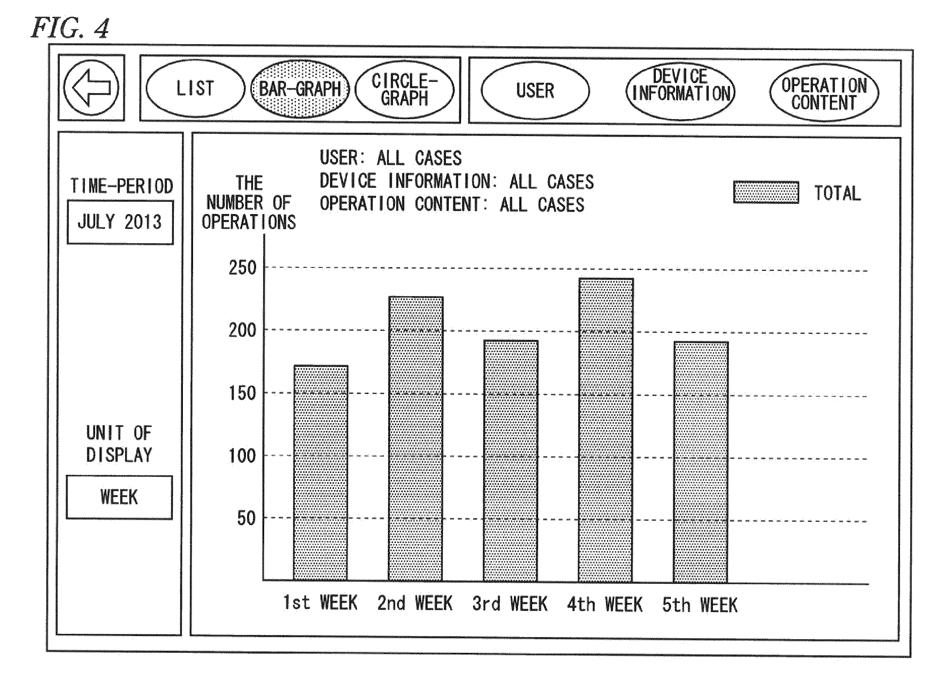

First, a change of the unit of display is described. When, e.g., "Jul." of the unit-of-display label indicated by arrow (1) is designated from the screen-image illustrated in FIG. 3C, the number of operations performed in July, 2013 is displayed in a graph, as illustrated in FIG. 4. In addition, "July 2013" is displayed in the time-period selection area. In this case, the unit of display is developed into a "week" that is finer than a month. Thus, a "week" is displayed in the unit-of-display in the unit-of-display selection area. If the unit of display is changed to a "day" in this state, the number of operations performed in July is developed into the number of operations performed in each day. Incidentally, the designation of the unit-of-display label can be performed by operations, such as a click made using a pointing device, and a touch made to a corresponding area on the screen-image.

Thus, a specific unit-of-display label is designated so that the number of operations performed in a time-period can be extracted and developed into the number of operations, which is counted in a finer unit of display. Further, if the "return" button is designated from a state illustrated in FIG. 4, the screen-image is returned to the screen-image illustrated in FIG. 3C. Even if the "return" button is designated in other screen-images, the screen-image returns to the last screen-image.

Further, if the "first week" is designated in the unit-of-display label in a state illustrated in FIG. 4, the number of operations performed in each day of the first week of July 2013 is displayed in a graph. Thus, the operation history can be narrowed down by repeating the designation of the unit-of-display label to change the time-period from a month through a week and a day to an hour.

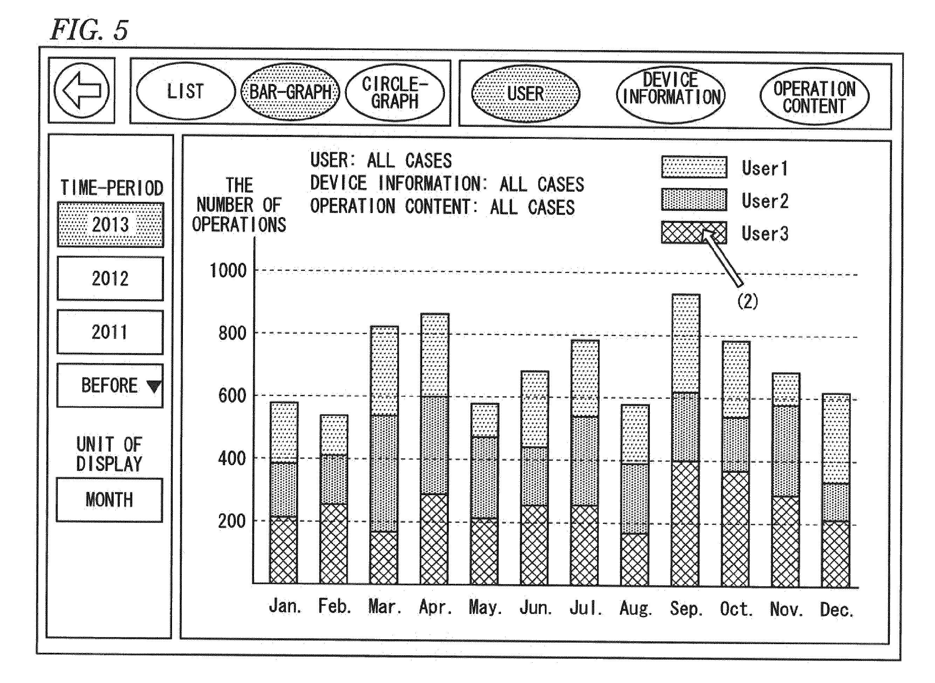

Next, the change of the tabulation item is described hereinafter. When the "user" in the tabulation item selection area is designated from the screen-image illustrated in FIG. 3C, a total number of operations performed by each user in each month is displayed in a stacked bar graph, as illustrated in FIG. 5. Further, "User 1", "User 2" and "User 3", i.e., the details of the "user" are displayed in the "legends". From this state, the screen-image can be returned to the screen-image illustrated in FIG. 3C by changing the unit of display according to the above procedure, or designating the "return" button.

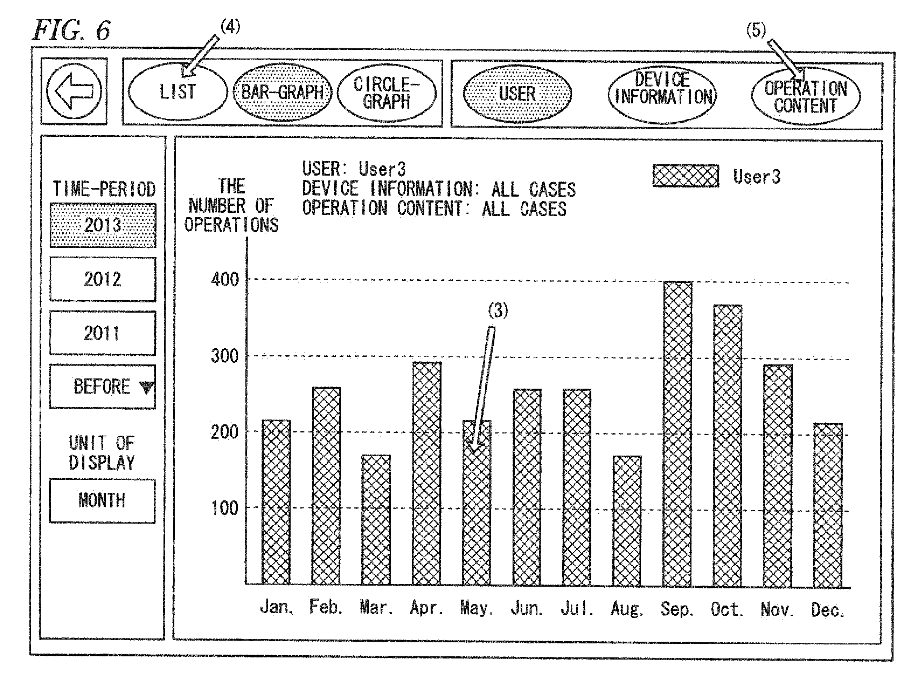

When "User 3" in the "legends" indicated by arrow (2) is designated in the screen-image illustrated in FIG. 5, the number of operations performed by "User 3" is extracted and displayed, as illustrated in Fig. 6. At that time, only the number of operations performed by "User 3" of the "User" is extracted. Thus, in the "current items", it is displayed that "User: User 3".

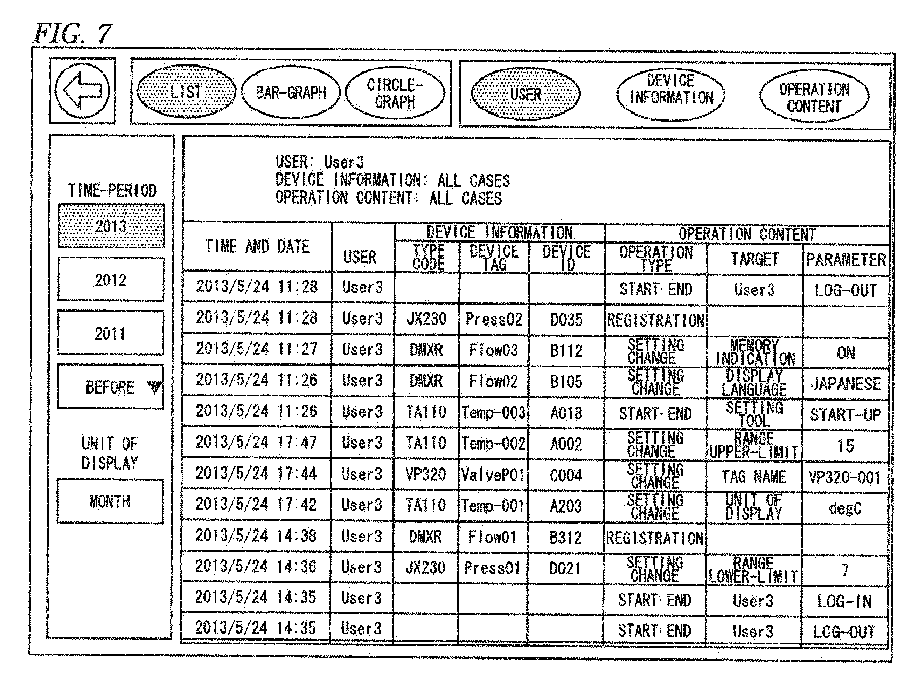

If the bar part corresponding to May, which is indicated by arrow (3), is designated in the bar graph in this state, an operation history list of operations performed by "User 3" in May 2013 is displayed, as illustrated in FIG. 7. That is, when a bar part of the bar graph is designated, operation history data of the tabulation item corresponding to the designated bar part, can be extracted among currently displayed operation history data, and displayed in a list form. If specific operation history data is designated in the operation history list illustrated in FIG. 7, detailed information concerning the designated operation history data may be displayed.

Incidentally, if the "list" button indicated by arrow (4) is designated in the state illustrated in FIG. 6, only the display type is changed. Display targets are maintained. Thus, the operation history list of the currently displayed operations performed by "User 3" in January to December is displayed.

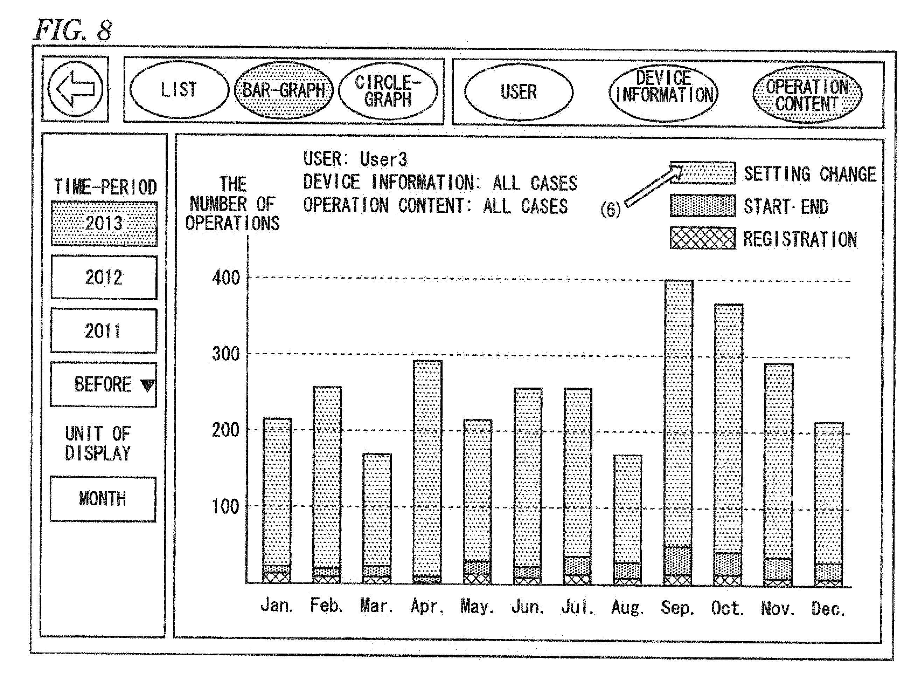

The designation of the tabulation items is performed by combining "user", "device information", and "operation content" with one another. For example, if the "operation content" indicated by arrow (5) is designated in the state illustrated in FIG. 6, in which the number of operations performed by "User 3" is extracted, the details of the "operation content" corresponding to "User 3" are displayed in a stacked bar graph form, as illustrated in FIG. 8. In the "legends", the details of the "operation content", i.e., "setting change", "start/end", and "registration" are displayed.

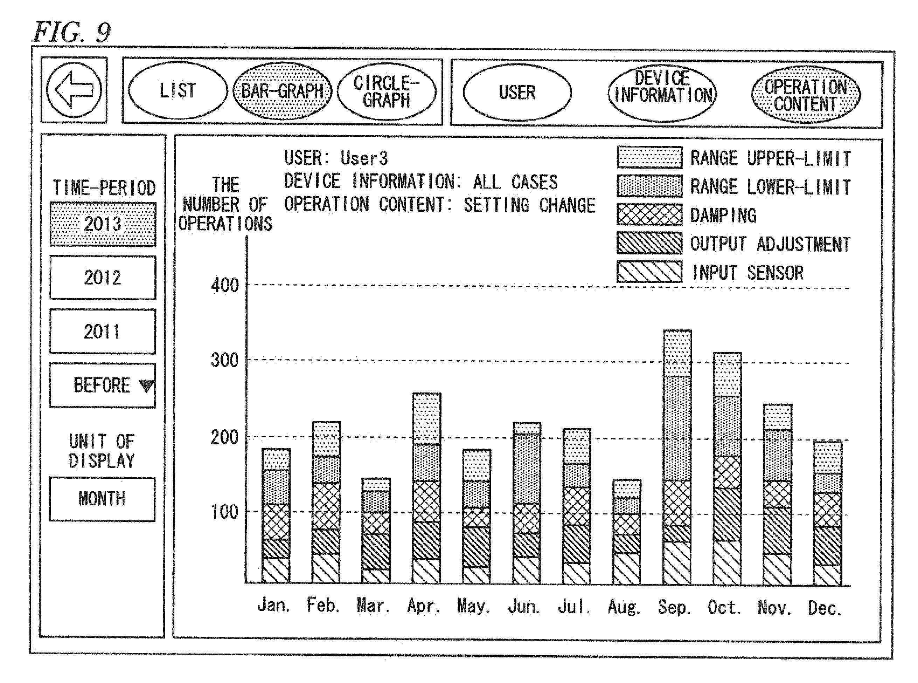

When the "setting change" indicated by arrow (6) in the "legends" is designated in this state, the "setting change" corresponding to "User 3" is extracted and displayed, as illustrated in FIG. 9. At that time, the number of operations performed only by "User 3" of the "user" is extracted. Further, the number of operations corresponding only to "setting change" of the "operation content" is extracted. Thus, in the "current items", it is displayed that "User: User 3", and that "Operation Content: Setting Change".

In the "operation content", the lower layer "setting change" includes further lower layers "targets" and "parameters". Thus, the details of the "targets" corresponding to the "setting change" are displayed in a stacked bar graph form. At that time, the details of the "target", i.e., "range upper-limit", "range lower-limit", "damping", "output adjustment", and "input sensor" are displayed in the "legends".

Similarly, the details of the "parameter", which correspond to the "range upper-limit", can be displayed in a stacked bar graph form, for example, by designating the "range upper-limit" in the "legends". In any case, associated operation history data can be displayed in a list form by designating a bar part of the bar graph.

Thus, the field device management apparatus 10 according to this embodiment is configured so that a graph can be displayed by narrowing down the time-period and the items by a simple operation, and that the associated operation history data can be displayed in a list form from a displayed graph. Therefore, the graph can be observed while changing an item of focus. In a case where a point concerning a user and a problematic point are found, the user can easily gain an access to associated operation history data.

Moreover, a user can easily find an unstable device in which a parameter is frequently changed. In addition, a user can easily identify a stable device. Further, a user can make use of the operation history list for reviewing the design of a plant. Incidentally, it is desirable that auxiliary lines indicating a reference value and a warning value can be added to a displayed graph, and that optional color coding can be performed on the graph according to the content or the like.

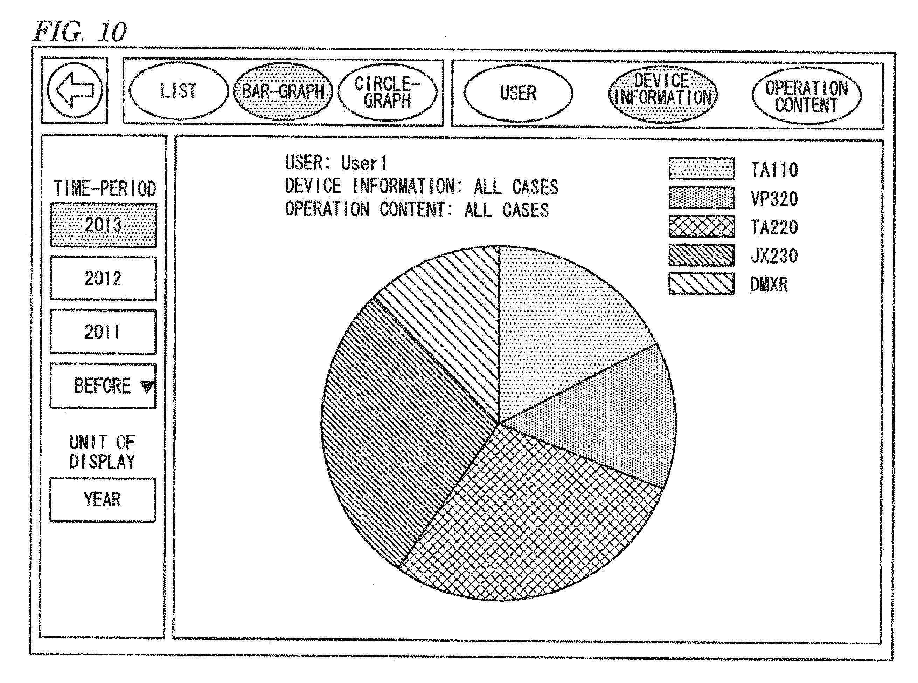

If a "circle graph" is designated in the display type selection area, currently displayed operation history data is displayed in a circle graph form illustrated in FIG. 10. The circle graph displays a total of the data in the time-period. Therefore, the circle graph doesn't display a unit-of-display label. If a specific legend is designated even in the circle graph, the details of the item corresponding to the designated legend are developed in the circle graph. Further, in the case of displaying a circle graph, when a sector part of the circle graph is designated, associated operation history data is extracted and displayed in a list form. Incidentally, a bar part of the bar graph, and a sector part of the circle graph are areas respectively presenting values. Thus, such parts are referred to as value representing parts.

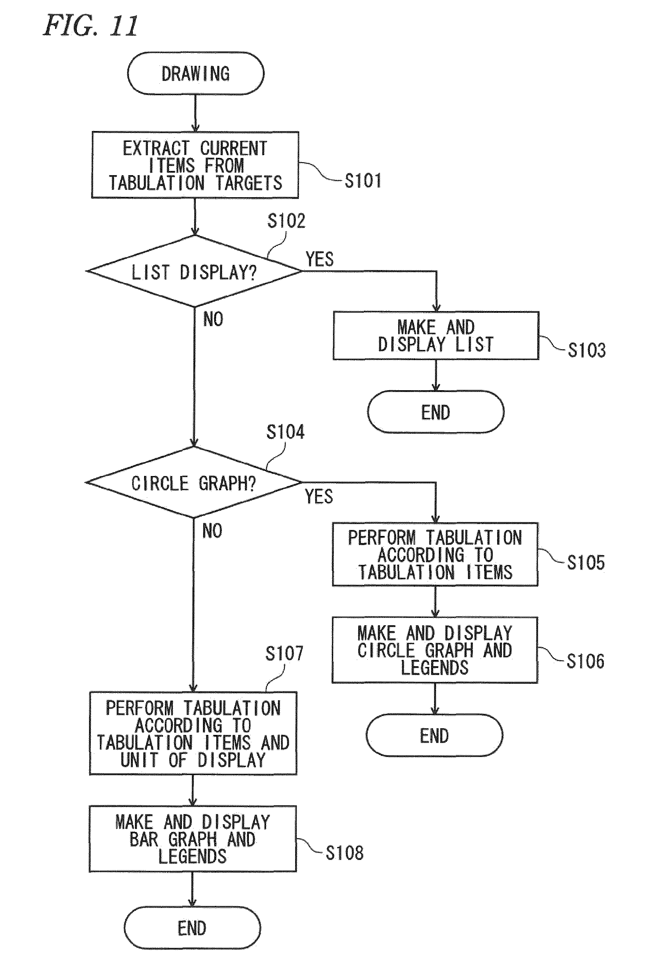

Hereinafter, a history display operation of the field device management apparatus 10 described above is described with reference to a flowchart. First, a fundamental drawing process of drawing a history display screen-image is described with reference to a flowchart illustrated in FIG. 11.

In the drawing process, in step S101, the history tabulation module 160 extracts, from tabulation targets in the operation history list, associated targets according to the current items. Incidentally, in an initial state, the tabulation targets are all of the operation history data corresponding to each year displayed in the "time-period". If the operation history data is already narrowed down by designating the "unit-of-display label", the tabulation targets are the narrowed operation history data corresponding to the unit of display.

If the display type is a "list" (Yes in step S102), in step S103, the history tabulation module 160 makes a list of the operation history data extracted according to the current items, and in step S103, the display module 140 displays the list.

If the display type is a "circle graph" (Yes in step S104), in step S105, the history tabulation module 160 performs, according to the tabulation items, tabulation on the operation history data extracted according to the current items. In step S106, the history tabulation module 160 makes a circle graph representing a tabulation result, and legends corresponding to the details of the data. In addition, in step S106, the display module 140 displays the circle graph and the legends.

If the display type is not a "circle graph" (No in step S104), that is, if the display type is a "bar graph", in step S107, the history tabulation module 160 performs, according to the tabulation items and the unit of display, tabulation on the operation history data extracted according to the current items. The tabulation item is assumed to be a lower-order layer of the current item. Further, the history tabulation module 160 makes a bar graph and the legends corresponding to the details of the data. In step S108, the display module 140 displays the bar graph and the legends.

Consequently, the list illustrated in FIG. 7, the circle graph illustrated in FIG. 10, and the bar graph illustrated in FIG. 5 are drawn.

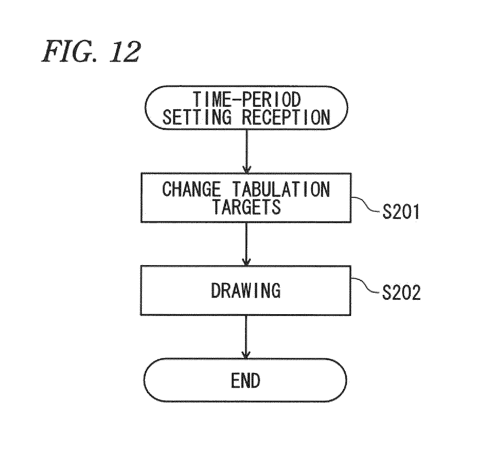

Next, processing in the case of receiving, on the history display screen-image, an instruction to set the "time-period" is described hereinafter with reference to a flowchart illustrated in FIG. 12.

When the operation receiving module 110 receives, on the history display screen-image, an instruction to set the "time-period", the display module 140 changes the tabulation targets in step S201. For example, if the operation receiving module 110 receives an instruction to change the "time-period" from 2013 to 2014, the display module 140 changes the tabulation targets of the operation history data from those corresponding to 2013 to those corresponding to 2012. Then, in step S202, the display module 140 performs the above drawing, using the changed tabulation targets.

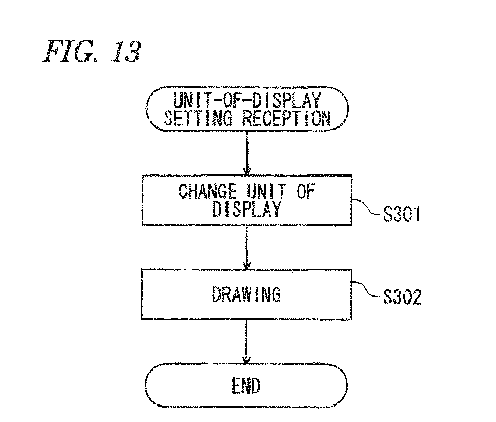

Next, processing in the case of receiving, on the history display screen-image, an instruction to set the "unit of display" is described hereinafter with reference to a flowchart illustrated in FIG. 13.

When the operation receiving module 110 receives, on the history display screen-image, an instruction to set the "unit-of-display", the history tabulation module 160 changes the unit of display in step S301. For example, if the operation receiving module 110 receives an instruction to change the "unit-of-display" from a "month" to a "day", the history tabulation module 160 changes, from a "month" to a "day", the unit of display at the time of displaying a bar graph. Consequently, the narrowing-down and the expansion of the range can be performed on the operation history data according to the time-period. Then, in step S302, the above drawing is performed using the changed display targets.

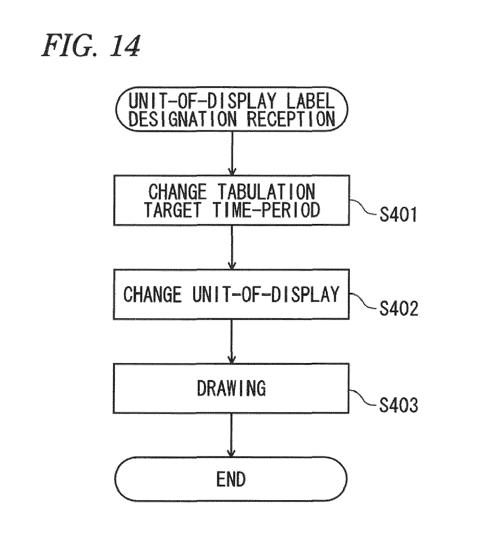

Next, processing in the case of receiving, on the history display screen-image, an instruction to designate the "unit-of-display label" is described with reference to a flowchart illustrated in FIG. 14.

When the operation receiving module 110 receives, on the history display screen-image, the designation of the "unit-of-display label", in step S401, the history tabulation module 160 changes a tabulation target time-period. For example, if the unit-of-display label indicating "May" is designated, the history tabulation module 160 sets the tabulation time-period to be May.

The unit-of-display is changed in step S402, in addition to the change of the tabulation target time-period. For example, if the tabulation time-period is a "month", the unit-of-display is set at a "week". If the tabulation time-period is a "week", the unit-of-display is set at a "day". If the tabulation time-period is a "day", the unit-of-display is set at an "hour". Then, in step S403, the above drawing process is performed using the set tabulation target time-period and the set unit-of-display.

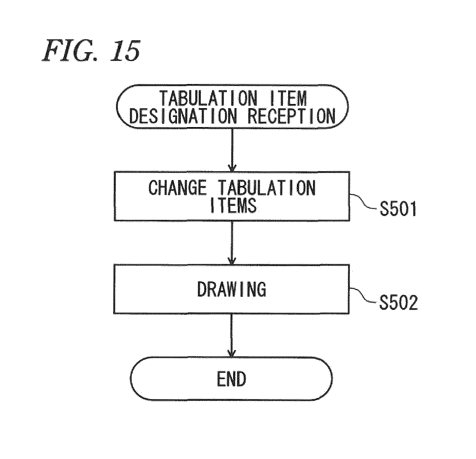

Processing in the case of receiving, on the history display screen-image, the designation of the "tabulation items" is described hereinafter with reference to a flowchart illustrated in FIG. 15.

When the operation receiving module 110 receives, on the history display screen-image, the designation of the tabulation item", the history tabulation module 160 changes the tabulation items in step S501. That is, if the "user" is designated, the tabulation item is set to a "user". If the "device information" is designated, the tabulation item is set to "device information". If the operation content" is designated, the tabulation item is set to "operation content". Then, according to the changed tabulation item, the above drawing process is performed in step S502.

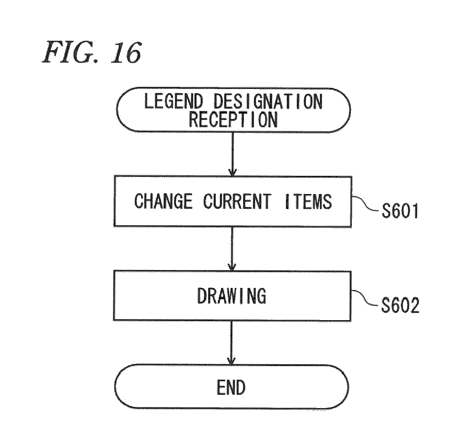

Next, processing in the case of receiving, on the history display the designation of the "legends" is described hereinafter with reference to a flowchart illustrated in FIG. 16.

When the operation receives the designation of one of the items of the "legends", the history tabulation module 160 changes the current item to the designated one of the items in step S601. For example, when plural items, i.e., the "setting registration", the "start/end", and "registration" are displayed in the "legends", if the "setting registration" is designated, the current item corresponding to the "operation content" is changed to the "setting registration". Then, in step S602, the above drawing process is performed according to the changed current item.

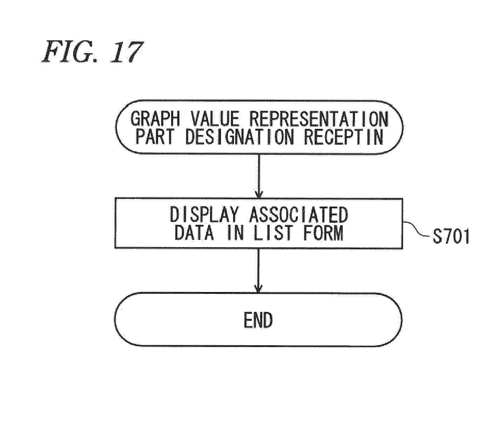

Finally, processing in the case of receiving the designation of a graph part on the history display screen-image during the display of a graph is described with reference to a flowchart illustrated in FIG. 17.

When the operation receiving module 110 receives the designation of a value representing part of the graph on the history display screen-image during the graph display, in step S701, the display module 140 displays operation history data corresponding to the designated value representing part. For example, if a bar part is designated in a bar graph displayed, operation history data corresponding to the unit of display associated with the designated bar part is displayed in a list form in step S701. For example, when a sector part is designated in a circle graph displayed, operation history data corresponding to the unit of display associated with the designated sector part is displayed in a list form.

## Claims

1. An operation history display apparatus, comprising:
an operation history data storage configured to store an operation history data;
an operation receiving module configured to receive an operation from a user;
and
a history tabulation module configured to perform tabulation on the operation history data using a tabulation item, display a graph representing a result of the tabulation, and display, when receiving a designation of a value representing part of the graph via the operation receiving module, operation history data corresponding to the value representing part in a list form.

2. The operation history display apparatus according to claim 1,
wherein
the operation history data includes information concerning a user, device information, and an operation content, and
the history tabulation module is configured to perform the tabulation, using each of the user, the device information, and the operation content as the tabulation item.

3. The operation history display apparatus according to claim 1 or 2,
wherein
the graph includes a legend describing a value displaying part, and
when the history tabulation module receives a designation of one of items of the legend via the operation receiving module, the history tabulation module performs narrowing-down using the item of the legend according to the designation and displays a graph.

4. The operation history display apparatus according to one of claims 1 to 3, wherein
the history tabulation module is configured to select a bar graph which includes a unit-of-display label representing a unit-of-display corresponding to a time-period, as the graph, and
when the history tabulation module receives a designation of a part of the unit-of-display label via the operation receiving module, the history tabulation module performs narrowing-down according to a time-period indicated by the part of the unit-of-display label according to the designation, and displays the graph.

5. The operation history display apparatus according to claim 4,
wherein
the history tabulation module is configured to display, as the bar graph, a stacked bar graph representing a breakdown of the tabulation item.

6. A computer-readable storage medium storing a program for causing a computer to function as the operation history display apparatus according to one of claims 1 to 5.
